(19) Europäisches Patentamt
European Patent Office
Office européen des brevets

(11) Veröffentlichungsnummer : **0 074 557**
**B1**

(12) **EUROPÄISCHE PATENTSCHRIFT**

(45) Veröffentlichungstag der Patentschrift : **30.01.85**

(51) Int. Cl.⁴ : **C 09 B 62/085**, D 06 P 3/66, D 06 P 3/10

(21) Anmeldenummer : **82107997.7**

(22) Anmeldetag : **31.08.82**

(54) **Azo-Reaktivfarbstoffe.**

(30) Priorität : **10.09.81 DE 3135949**

(43) Veröffentlichungstag der Anmeldung : **23.03.83 Patentblatt 83/12**

(45) Bekanntmachung des Hinweises auf die Patenterteilung : **30.01.85 Patentblatt 85/05**

(84) Benannte Vertragsstaaten : **CH DE FR GB LI**

(56) Entgegenhaltungen :
**FR-A- 2 358 450**
**FR-A- 2 372 873**
**GB-A- 2 030 168**
**GB-A- 2 030 591**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Jäger, Horst, Dr.**
**Carl-Rumpff-Strasse 37**
**D-5090 Leverkusen 1 (DE)**

**EP 0 074 557 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind Azo-Reaktivfarbstoffe der Formel

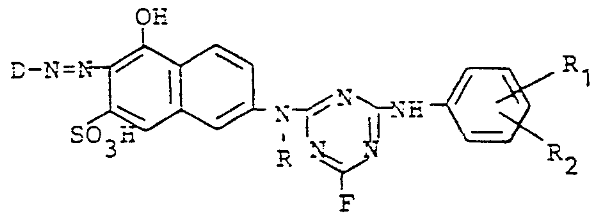

(I)

worin
D = Rest einer Diazokomponente,
R = Wasserstoff oder Methyl,
$R_1$ = Wasserstoff oder Substituent,
$R_2$ = $—(O\text{-alkylen})—_nOR_3$
worin
n = 1-3,
alkylen = $C_2$-$C_4$-alkylen,
$R_3$ = Wasserstoff oder Methyl.

D steht vorzugsweise für gegebenenfalls durch Sulfo, $C_1$-$C_2$-Alkoxy oder $C_1$-$C_4$-Alkyl substituiertes Phenyl oder durch Sulfo substituiertes Naphthyl, $R_1$ und $R_3$ stehen vorzugsweise für Wasserstoff und n steht vorzugsweise für 1.

Beispiele für Amine der Formel

$$D—NH_2 \quad (II)$$

sind folgende :

1-Amino-2-sulfo-4-methylbenzol, 1-Amino-2-sulfo-4-ethylbenzol, 1-Amino-2-sulfo-4-chlor-benzol, 1-Amino-2-sulfo-4-methoxy-benzol, 1-Amino-2-sulfo-4-ethoxy-benzol, 1-Amino-2-sulfo-4-carboxy-benzol, 1-Amino-2,4-disulfobenzol, 1-Amino-2-sulfo-4-(4'-sulfophenylazo)-benzol, 1-Amino-2-sulfo-4-acetylaminobenzol, 1-Amino-2,5-disulfo-benzol, 1-Amino-2,5-disulfo-4-methyl-benzol, 1-Amino-2,5-disulfo-4-acetyl-amino-benzol, 1-Amino-2-sulfo-benzol, 1-Amino-2,5-disulfo-4-methoxy-benzol, 1-Amino-2,5-disulfo-4-ethoxy-benzol.

2-Amino-naphthalin-1-sulfonsäure,
2-Amino-naphthalin-1,5-disulfonsäure,
2-Amino-naphthalin-1,5,7-trisulfonsäure,
2-Amino-naphthalin-3,6-disulfonsäure,
2-Amino-naphthalin, 3,6,8-trisulfonsäure,
2-Amino-naphthalin-4,8-disulfonsäure,
2-Amino-naphthalin-4,6,8-trisulfonsäure,
2-Amino-naphthalin-5,7-disulfonsäure,
2-Amino-naphthalin-6,8-disulfonsäure,
2-Amino-naphthalin-6-sulfonsäure,
2-Amino-naphthalin-8-sulfonsäure,
1-Amino-naphthalin-4-sulfonsäure,
1-Amino-naphthalin-5-sulfonsäure,
1-Amino-naphthalin-6-sulfonsäure,
1-Amino-naphthalin-7-sulfonsäure,
1-Amino-naphthalin-4,6-difulfonsäure,
1-Amino-naphthalin-4,7-disulfonsäure,
1-Amino-naphthalin-3,6-disulfonsäure,
2-Amino-6-nitro-naphthalin-4,8-disulfonsäure,
2-Amino-6-acetylamino-naphthalin-4,8-disulfonsäure.

Beispiele für Substituenten $R_1$ sind Alkylgruppen, wie Methyl oder Ethyl, Alkoxygruppen wie Methoxy und Ethoxy, Halogenatome wie fluor, Chlor und Brom, Sulfo- und Carboxygruppen. Bevorzugt steht $R_1$ für Wasserstoff.

Beispiele für Reste $R_2$ sind folgende :

$-OCH_2CH_2OH$
$-OCH_2CH_2OCH_3$

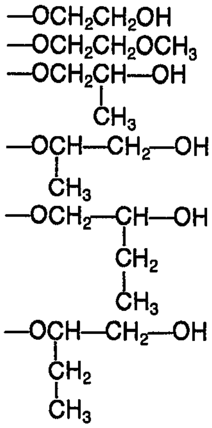

$R_3$ steht bevorzugt für Wasserstoff.

Bevorzugte Farbstoffe entsprechen der Formel

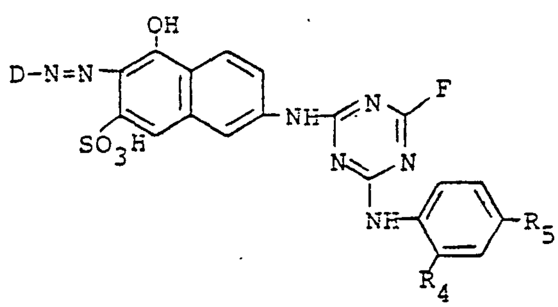

(III)

wobei

D die oben angegebene Bedeutung hat und
$R_4$, $R_5$ = Wasserstoff oder $-OCH_2CH_2OH$, wobei
$R_4 \neq R_5$.

Weiterhin bevorzugt sind Farbstoffe der Formel (III), in denen D gegebenenfalls durch Sulfo, $C_1$-$C_2$-Alkoxy oder $C_1$-$C_4$-Alkyl substituiertes Phenyl oder gegebenenfalls durch Sulfo substituiertes Naphthyl bedeutet, insbesondere solche in denen

D = 1-Amino-2-sulfo-benzol,
1-Amino-2-sulfo-4-methoxy-benzol und
1-Amino-2,5-disulfo-4-methoxy-benzol,
2-Amino-1,5-disulfo-naphthalin,

sowie solche, in denen

$R_4$ = Wasserstoff und
$R_5$ = $-OCH_2CH_2OH$.

Gegenstand der Erfindung ist weiterhin ein Verfahren zur Herstellung der Verbindungen der Formel (I). Er besteht darin, daß man Farbstoffe der Formel

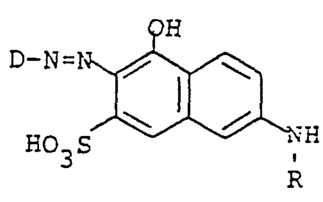

(IV)

worin

D und R die oben angegebene Bedeutung haben, mit 2,4,6-Trifluor-1,3,5-triazin unter Abspaltung von Flußsäure kondensiert und die resultierende Difluorverbindungen mit einem Amin der Formel

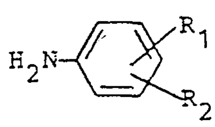

(V)

worin

$R_1$ und $R_2$ die oben angegebene Bedeutung haben, unter Abspaltung von Flußsäure zu Farbstoffen der Formel (I) umsetzt.

Die Kondensation der Farbstoffe (IV) mit dem s-Trifluortriazin erfolgt vorzugsweise in waßriger Lösung oder Suspension, bei niedriger Temperatur und bei schwach saurem, neutralem bis schwach alkalischem pH-Wert.

Vorteilhaft wird die Kondensation im pH-Bereich von 4-7 ausgeführt. Der freiwerdende Fluorwasserstoff wird durch Zugabe wäßriger Alkalihydroxide, -carbonate oder -bicarbonate abgestumpft. Die Umsetzung der Difluorverbindung mit den Aminen (V) erfolgt ebenfalls vorzugsweise in wäßriger Lösung oder Suspension, bei niedriger Temperatur und bei schwach saurem bis neutralem bis schwach alaklischem pH-Wert. Der bei der Kondensation freiwerdende Fluorwasserstoff wird durch Zugabe wäßriger Alkalihydroxide, -carbonate oder -bicarbonate neutralisiert. Auf eine Isolierung der Difluorverbindung wird im allgemeinen verzichtet.

Die Farbstoffe (IV) werden erhalten durch Kupplung der diazotierten Amine (II) mit I-Säure unter solchen Bedingungen, daß die Kupplung bevorzugt in o-Stellung zur Hydroxylgruppe der I-Säure erfolgt. Es wird jedoch im allgemeinen die Kupplung mit einer N-acylierten I-Säure vorgezogen, wobei anschließend der Acylrest durch Erwärmen im sauren oder alkalischen Medium abgespalten wird. Als Acylrest kommen insbesondere Acetyl, Carbamoyl, Methoxycarbonyl, Ethoxycarbonyl oder —CO-(I-Säureharnstoff durch Umsetzung mit Phosgen) in Frage.

Beispiele für Amine (V) sind folgende :

1-Amino-4-β-oxyethoxy-benzol, 1-Amino-2-β-oxyethoxy-benzol, 1-Amino-4-β-methoxy-ethoxy-benzol, 1-Amino-2-methyl-4-β-oxyethoxy-benzol, 1-Amino-2-chlor-4-β-oxyethoxy-benzol, 4-Aminophenyl-diglykol, 1-Amino-2-sulfo-4-β-oxyethoxy-benzol, 1-Amino-4-sulfo-2-β-oxyethoxy-benzol.

Für den Fall, daß $R_1$ = Sulfo oder Carboxy, kann man die Farbstoffe (I) auch so herstellen, daß man zunächst das entsprechende Amin der Formel (V) mit s-Trifluortriazin umsetzt und dann die Kondensation mit dem Farbstoff (IV) ausführt.

Eine weitere Möglichkeit zur Herstellung von (I) besteht darin, daß man diazotierte Amine (II) mit Kupplungskomponenten der Formel

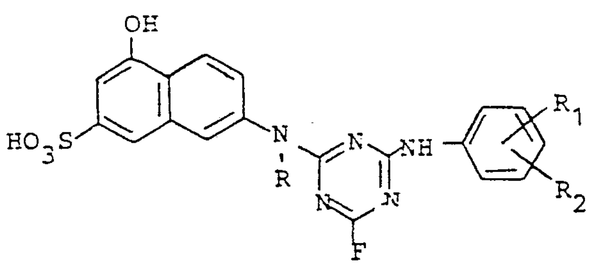

(VII)

worin

R, $R_1$ und $R_2$ die oben angegebene Bedeutung haben, in schwach saurem, neutralem bis schwach alkalischem Bereich vereinigt.

Die neuen Farbstoffe eignen sich zum Färben und Bedrucken von Hydroxyl- oder Amidgruppen enthaltenden Materialien, wie Textilfasern, Fäden und Geweben aus Wolle, Seide, synthetischen Polyamid-, und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

In GB-A-2 030 591 und 2 030 168 sind ähnliche Farbstoffe beschrieben. Gegenüber den ähnlichen Farbstoffen nach FR-A-2 358 450 zeichnen sich die erfindungsgemäßen Farbstoffe durch bessere Farbausbeuten aus.

Die angegebenen Formeln der Farbstoffe sind die der entsprechenden freien Säuren. Die Farbstoffe wurden im allgemeinen in Form der Alkalisalze, insbesondere der Na-Salze isoliert und zum Färben eingesetzt.

## Beispiel 1

55,3 g des Farbstoffs der Formel 1,5-Disulfo-naphthalin-(2 azo 2) 1-hydroxy-3-sulfo-6-amino-naphthalin werden in einem Gemisch aus 400 ml Wasser und 200 g Eis gelöst. Man tropft dann 14 g s-Trifluortriazin ein und hält gleichzeitig durch Zugabe 20 %iger Sodalösung einen pH-Wert von 6-6,5 ein. Nach dem Ende der Acylierung gibt man 15,3 g 1-Amino-4-β-hydroxyethoxy-benzol zu, stellt den pH-Wert mit 20 %iger Sodalösung auf 6 und rührt solange bei pH 6 bis die 2. Kondensation beendet ist. Temp. 0-10°.

Der Farbstoff wird durch Zusatz von Kochsalz abgeschieden, abfiltriert, getrocknet und gemahlen. Es resultiert ein hellrotes Pulver, das sich in Wasser mit orangener Farbe löst. Der Farbstoff entspricht der Formel

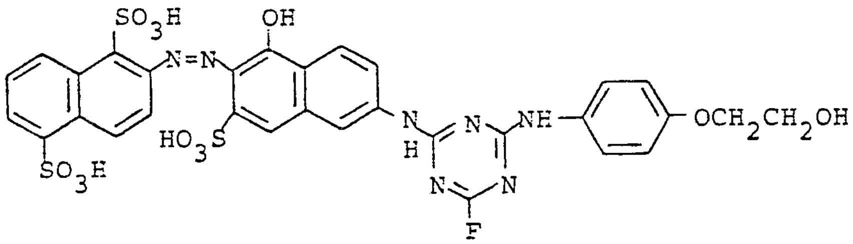

Der als Ausgangsmaterial verwendete Farbstoff wird erhalten durch Diazotieren von 2-Amino-1,5-disulfo-naphthalin, Kuppeln mit N-Acetyl-I-Säure, anschließende Verseifung der Acetylgruppe mit verd. Natronlauge bei 80-90° und Isolierung durch Aussalzen im schwach alkalischen Bereich.

Der so erhaltene Farbstoff färbt Baumwolle nach üblichen Verfahren in rotstichig orangen Tönen.

Wenn man nach den Angaben von Beispiel 1 verfährt, jedoch anstelle des dort verwendeten Aminoazofarbstoffs Verbindungen einsetzt, die durch Diazotieren der in Spalte 1 aufgeführten Diazokomponenten, Kupplung mit den Acetylverbindungen der in Spalte 2 genannten Kupplungskomponenten und Verseifung der Acetylgruppe erhältlich sind und anstelle von 1-Amino-4-β-hydroxyethoxy-benzol eines der in Spalte 3 beschriebenen Amine verwendet, so resultieren gleichfalls wertvolle Farbstoffe, die Baumwolle nach einem der aufgeführten Färbeverfahren in einem der in Spalte 4 aufgeführten Tönen färben.

(Siehe Tabelle Seite 6 f.)

| Beispiel | | | | |
|---|---|---|---|---|
| 2 | 1-Amino-2-sulfo-benzol | 1-Oxy-3-sulfo-6-amino-naphthalin | 1-Amino-4-ß-oxy-ethoxy-benzol | gelbstichig orange |
| 3 | 1-Amino-2-sulfo-4-methoxy-benzol | " | " | scharlach |
| 4 | 1-Amino-2,5-disulfo-4-methoxy-benzol | " | " | gelbstichig scharlach |
| 5 | 1-Amino-2,5-disulfo-4-methyl-benzol | " | " | orange |
| 6 | 2-Amino-3,6,8-tri-sulfo-naphthalin | " | " | scharlach |
| 7 | 1-Amino-2-sulfo-benzol | " | 1-Amino-2-ß-oxy-ethoxy-benzol | gelbstichig orange |
| 8 | 1-Amino-2-sulfo-4-methoxy-benzol | " | " | scharlach |
| 9 | 2-Amino-1,5-disulfo-naphthalin | " | " | rotstichig orange |
| 10 | 2-Amino-1-sulfo-naphthalin | 1-Oxy-3-sulfo-6-methylamino-naphthalin | " | stark rotstichig orange |
| 11 | " | " | 1-Amino-4-ß-oxy-ethoxy-benzol | " |
| 12 | 1-Amino-benzol | 1-Oxy-3-sulfo-6-amino-naphthalin | 1-Amino-3-sulfo-4-ß-oxyethoxy-benzol | orange |
| 13 | 2-Amino-4,8-disulfo-naphthalin | " | 1-Amino-4-ß-oxy-ethoxy-benzol | gelbstichig rot |

## Ansprüche

1. Farbstoffe der Formel

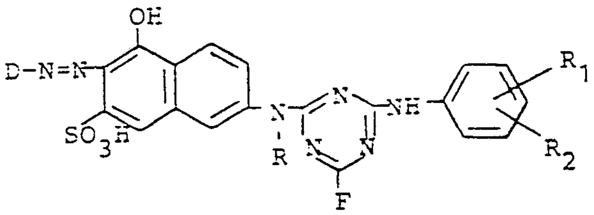

worin
D = Rest einer Diazokomponente,
R = Wasserstoff oder Methyl,
$R_1$ = Wasserstoff oder Substituent,
$R_2$ = $-(\text{O-alkylen})-_n\text{OR}_3$
wobei
n = 1-3
alkylen = $C_2$-$C_4$-alkylen und
$R_3$ = Wasserstoff oder Methyl.

2. Farbstoffe des Anspruchs 1 mit
D = gegebenenfalls durch Sulfo, $C_1$-$C_2$-Alkoxy oder $C_1$-$C_4$-Alkyl substituiertes Phenyl oder gegebenenfalls durch Sulfo substituiertes Naphthyl,
$R_3$, $R_1$ = Wasserstoff und
n = 1.

3. Farbstoffe der Formel

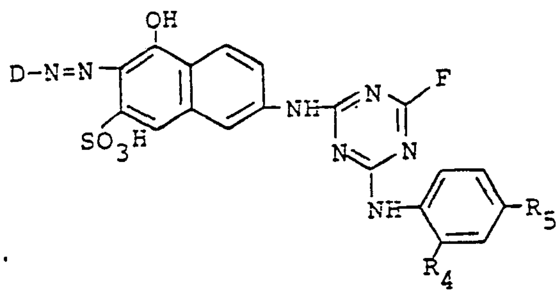

worin
D die in Anspruch 1 und 2 angegebene Bedeutung hat und
$R_4$, $R_5$ = Wasserstoff oder $-OCH_2CH_2OH$, wobei
$R_4 \neq R_5$.

4. Farbstoffe der Ansprüche 1-3, worin
D = 1-Amino-2-sulfo-benzol,
1-Amino-2-sulfo-4-methoxy-benzol,
1-Amino-2,5-disulfo-4-methoxy-benzol oder
2-Amino-1,5-disulfo-naphthalin.

5. Farbstoffe der Ansprüche 3 und 4, worin
$R_4$ = Wasserstoff und
$R_5$ = $-OCH_2CH_2OH$.

6. Verfahren zur Herstellung der Farbstoffe der Formel

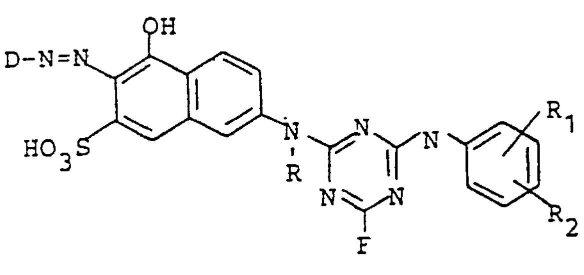

worin
D, R, $R_1$ und $R_2$ die in Anspruch 1 angegebene Bedeutung haben,

dadurch gekennzeichnet, daß man Farbstoffe der Formel

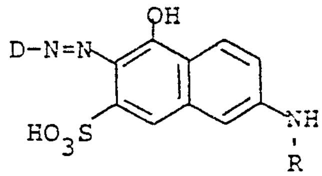

mit 2,4,6-Trifluortriazin unter Abspaltung von 1 Mol Flußsäure umsetzt und die erhaltene Difluorverbindung mit Aminen der Formel

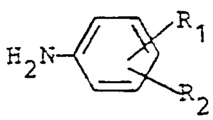

worin

$R_1$ und $R_2$ die in Anspruch 1 angegebene Bedeutung haben, unter Abspaltung von 1 Mol Flußsäure kondensiert.

7. Verwendung der Farbstoffe der Ansprüche 1 bis 5 zum Färben und Bedrucken von hydroxylgruppenhaltigen oder amidgruppenhaltigen Fasermaterialien.

**Claims**

1. Dyestuffs of the formula

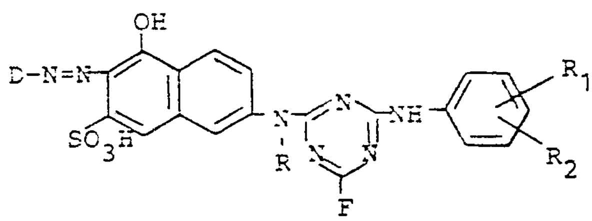

wherein

D = the radical of a diazo component,
R = hydrogen or methyl,
$R_1$ = hydrogen or a substituent and
$R_2$ = —(O-alkylene)—$_n$O$R_3$

wherein

n = 1-3
alkylene = $C_2$-$C_4$-alkylene and
$R_3$ = hydrogen or methyl.

2. Dyestuffs of Claim 1 in which

D = phenyl optionally substituted by sulpho, $C_1$-$C_2$-alkoxy or $C_1$-$C_4$-alkyl or naphthyl optionally substituted by sulpho,
$R_3$ and $R_1$ = hydrogen and
n = 1.

3. Dyestuffs of the formula

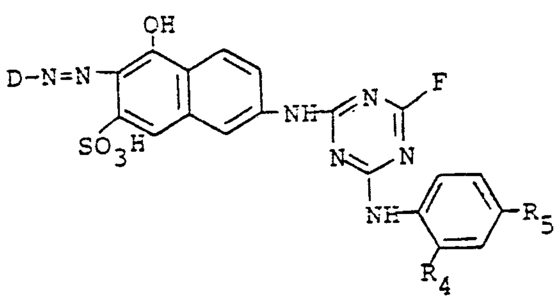

wherein

D has the meaning indicated in Claim 1 and 2 and $R_4$ and $R_5$ = hydrogen or —$OCH_2CH_2OH$ but $R_4 \neq R_5$.

4. Dyestuffs of Claims 1-3, wherein
D = 1-amino-2-sulphobenzene,
1-amino-2-sulpho-4-methoxybenzene,
1-amino-2,5-disulpho-4-methoxybenzene or
2-amino-1,5-disulphonaphthalene.

5. Dyestuffs of Claims 3 and 4, wherein
$R_4$ = hydrogen and
$R_5$ = $—OCH_2CH_2OH$.

6. Process for preparing dyestuffs of the formula

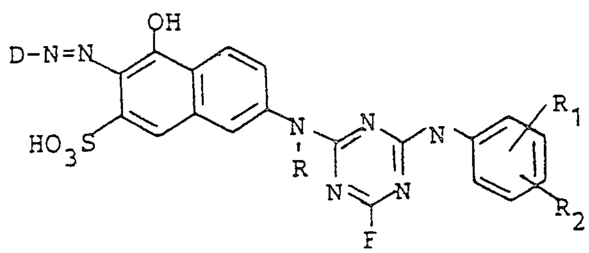

wherein
D, R, $R_1$ and $R_2$ have the meaning indicated in Claim 1,
characterised in that dyestuffs of the formula

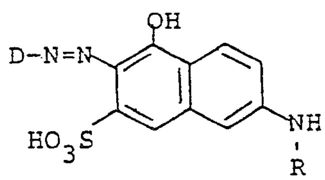

are reacted with 2,4,6-trifluorotriazine with elimination of 1 mol of hydrofluoric acid and the resulting difluoro compound is condensed with amines of the formula

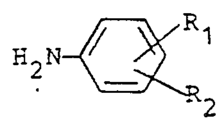

wherein
$R_1$ and $R_2$ have the meaning indicated in Claim 1 with elimination of 1 mol of hydrofluoric acid.

7. Use of dyestuffs of Claims 1 to 5, for dyeing and printing fibre materials containing hydroxyl groups or amide groups.

**Revendications**

1. Colorants de formule

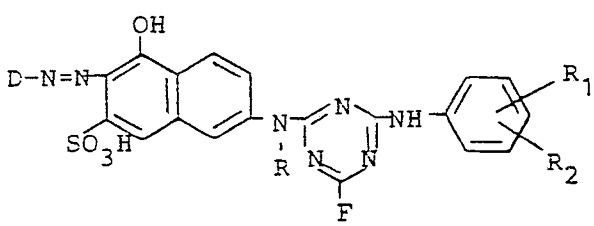

dans laquelle
D représente le reste d'un composant de copulation,
R représente un atome d'hydrogène ou un groupe méthyle,
$R_1$ représente l'hydrogène ou un substituant,
$R_2$ représente un groupe $—(O\text{-alkylène})—_nOR_3$
dans lequel
n est égal à 1-3,
le reste alkylène est un alkylène en $C_2$-$C_4$,

$R_3$ représente l'hydrogène ou un groupe méthyle.

2. Colorants de la revendication 1 dans lesquels

D représente de préférence un groupe phényle substitué par sulfo, alcoxy en $C_1$-$C_2$ ou alkyle en $C_1$-$C_4$ ou un groupe naphtyle éventuellement sulfo-substitué

$R_1$ et $R_3$ représentent l'hydrogène et

n est égal à 1.

3. Colorants de formule

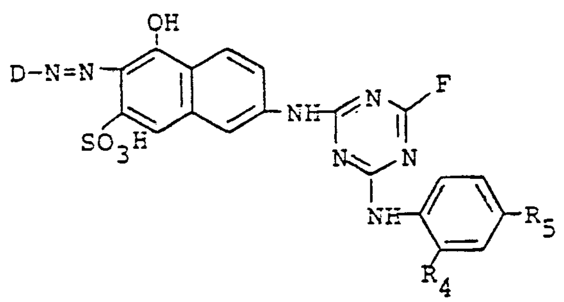

dans laquelle

D a la signification indiquée dans la revendication 1 ou 2 et

$R_4$ et $R_5$ représentent l'hydrogène ou $-OCH_2CH_2OH$ et

$R_4$ et $R_5$ sont différents.

4. Colorants des revendications 1-3 dans lesquels

D = 1-amino-2-sulfobenzène,

1-amino-2-sulfo-4-méthoxybenzène,

1-amino-2,5-disulfo-4-méthoxybenzène ou

2-amino-1,5-disulfo-naphtalène.

5. Colorants des revendications 3 et 4 dans lesquels

$R_4$ est l'hydrogène et

$R_5$ est $-OCH_2CH_2OH$.

6. Procédé pour la fabrication des colorants de formule

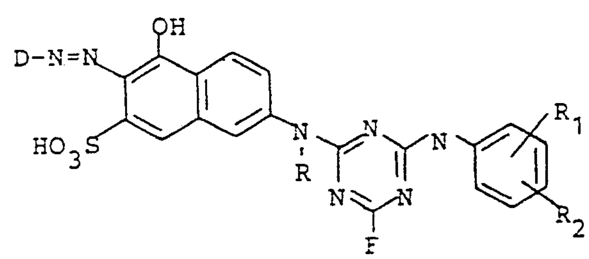

dans laquelle

D, R, $R_1$ et $R_2$ ont la signification indiquée dans la revendication 1, caractérisé en ce que l'on fait réagir des colorants de formule

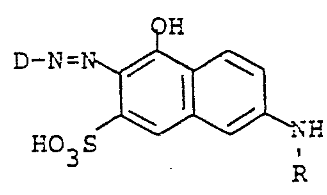

avec la 2,4,6-trifluorotriazine avec élimination d'une mole d'acide fluorhydrique et l'on condense le composé difluoro obtenu avec des amines de formule

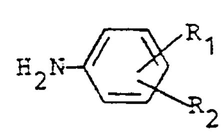

dans laquelle

$R_1$ et $R_2$ ont la signification indiquée dans la revendication 1, avec élimination d'une mole d'acide fluorhydrique.

7. Utilisation des colorants des revendications 1 à 5 pour la teinture et l'impression de matériaux fibreux contenant des groupes hydroxyles ou contenant les groupes amides.